# EUROPEAN PATENT SPECIFICATION

(11) **EP 4 691 866 B1**
(45) Date of publication and mention of the grant of the patent: **07.10.2026**
(21) Application number: 24193770.5
(22) Date of filing: 09.08.2024
(51) Int. Cl.: B60T 17/04, B60T 17/08

(54) **SPRING BRAKE ACTUATOR COMPRISING A BRAKE LINE BRACKET**
FEDERSPEICHERBREMSZYLINDER MIT BREMSLEITUNGSHALTER
ACTIONNEUR DE FREIN À RESSORT COMPRENANT UN SUPPORT DE LIGNE DE FREINAGE

(43) Date of publication of application: 11.02.2026
(73) Proprietor: ZF CV Systems Europe BV, 1170 Brüssel (BE)
(72) Inventor: SWIATKIEWICZ, Jakub, 54-109 Wroclaw (PL); GAWLIK, Rafal, 51-315 Wroclaw (PL); FLISEK, Filip, 51-180 Wroclaw (PL)
(74) Representative: Schäferjohann, Volker

(56) References cited:
- EP-A1- 4 279 347
- EP-B1- 3 038 871
- CA-A1- 2 209 180
- US-A1- 2017 341 635
- US-B2- 10 570 933

## Description

### Field of the invention

The invention relates to a spring brake actuator comprising a brake line bracket mounted on the housing of the spring brake actuator through a fixed connection to the boss of the housing. The invention also relates to a method of manufacturing a spring brake actuator and to a commercial vehicle comprising such a spring brake actuator.

### Background of the invention

The invention relates to a spring brake actuator, preferably providing both a service brake function and a parking brake function, and comprising a brake line bracket mounted to the housing of the spring brake actuator through a fixed connection to the boss. The brake line bracket serves the purpose of supporting brake line cables.

Spring brakes are used for parking brakes, as well as in auxiliary and emergency braking systems. If there is no compressed air in the braking system, a compression spring is expanded, and the brake is applied. This keeps a commercial vehicle in place, even on an inclined surface. The parking brake must be released to start the vehicle. To do so, compressed air is used to compress the spring and therefore release the brake.

More in detail, a spring brake actuator is used to drive a spring brake The spring brake actuator is operated using compressed air provided by a compressed-air supply container, which is filled by a compressor. The spring brake actuator comprises one or more pressure chambers and at least one diaphragm, which moves a push rod to operate a disc brake or a drum brake of the vehicle when the pressure chamber is filled with compressed air during a braking action being initiated by a respective driver of a vehicle.

The spring brake actuator typically contains a compression spring providing a force for actuating the parking brake function. The compression spring force acts on a parking piston, or a second diaphragm, via which the push rod is actuated. The compression spring can be compressed by a force appearing on the parking piston by applying compressed air in a parking chamber, which is the normal driving state of the vehicle. When the compressed air is released from the parking chamber, the compression spring expands and shifts the parking piston, which results in the activation of the brake and locking of the vehicle. The service brake function can be operated independently in the normal driving state, by applying compressed air in a service chamber of the spring brake actuator.

Double function brake actuators of this kind combining a service brake function with a parking brake function are known in the art.

The compression spring of the spring brake actuator is located in a chamber or housing of the actuator and rests upon the parking piston and a spring seat fitted to the bottom part of the housing. The spring seat enhances the safety of the spring brake actuator by improving the mechanical stiffness of the housing, which is usually made as a relatively thin sheet metal part. The spring seat is fixed to the bottom part of the housing by several screws.

The bracket for supporting brake line cables is usually fixed to the housing of the spring brake actuator through using at least some of the screws that hold the spring seat to the housing. Often, three screws are used to hold the spring seat to the bottom part of the housing. Two of such screws are normally chosen to be longer than the third one and are used to not only secure the spring seat to the housing, but also to firmly hold the bracket to the housing and the spring seat.

In order to improve the mechanical stiffness and the safety of the spring brake actuator, a need has arisen to avoid drilling holes in the spring seat in order to accommodate the screws used in the prior art to hold the spring seat to the housing, therefore there is a need to also dispose of the screws previously used to fix the bracket to the housing and to the spring seat.

An object of the present invention is therefore to provide an alternative way to secure a bracket for supporting brake line cables to the housing of a spring brake actuator, that does not involve connecting the bracket, the housing and the spring seat together.

Another object of the present invention is to provide a spring brake actuator that is lighter than the prior art spring brake actuators.

Yet another object of the present invention is to provide a spring brake actuator that is mechanically stiffer and safer than the prior art spring brake actuators.

Another object of the present invention is to provide a spring brake actuator comprising a bracket for supporting brake line cables, that can be freely mounted in different angular positions with respect to the longitudinal axis of the actuator.

Yet another object of the present invention is to provide a spring brake actuator that is cheaper and easier to manufacture than the prior art spring brake actuators. The document CA 22 09 180 A1 describes a mounting bracket for a piston stroke sensor in a pneumatic brake actuator, the bracket being fixed on one of the actuator attachment bolts.

### Summary of the invention

These and other objects are achieved by a spring brake actuator, preferably providing both a service brake function and a spring brake function. Such a spring brake actuator comprises a housing having a longitudinal axis and a hole located in correspondence with the longitudinal axis.

A boss is fitted to the housing in correspondence with the hole.

The spring brake actuator also comprises a support piston, for instance a parking piston, that defines, together with the housing, an interior space or chamber for receiving components of the spring brake actuator.

A compression spring is located in the interior space or chamber and rests upon the support piston and a spring seat fitted to the housing.

The spring brake actuator of the invention comprises a release bolt having a longitudinal axis which coincides with or is parallel to the longitudinal axis of the housing, the release bolt extending from outside of the spring brake actuator through the hole of the housing and being held against the boss of the housing by a release nut.

The spring brake actuator of the invention comprises a bracket for supporting brake line cables, the bracket being mounted on the housing of the spring brake actuator through a fixed connection to the boss.

According to one aspect, the longitudinal axis of the housing and the longitudinal axis of the release bolt coincide with the longitudinal axis of the spring brake actuator. According to one aspect, the spring seat and the support piston are located on opposite sides, along the longitudinal axis of the spring brake actuator, within the interior space or chamber.

According to a possible embodiment, the spring brake actuator of the invention does not comprise any spring seat since the housing is stiff enough to ensure adequate safety and mechanical resistance against the contact forces exerted by the compression spring. Adequate stiffness of the housing can be obtained, for instance, by choosing a specific material and/or by increasing the width of the metal sheet in correspondence to the bottom of the housing where the forces exerted by the compression spring are higher.

According to an embodiment, the release nut is held against the release bolt by a pin. According to an embodiment, the bracket is fixedly connected to the boss through pressing the bracket between the housing and the boss.

According to an alternative embodiment, the bracket is fixedly connected to the boss through a form-fit connection.

According to an aspect, the boss comprises a plurality of undercuts and the bracket comprises a fork-like end portion that is bent around the undercuts of the boss. According to an aspect, the fork-like end portion of the bracket comprises two bendable, elongated end portions, that are first inserted around the boss and then bent through application of pressure.

According to an aspect, the bracket comprises a ring-like end portion that is pressed around the boss. In such a case, the boss may preferably have undercuts.

According to an aspect, the bracket is fixedly connected to the boss through a circlip. According to an aspect, the bracket is fixedly connected to the boss through a nut. According to a preferred aspect, the bracket comprises an end portion having one or more retaining means adapted to prevent a rotation of the bracket with respect to the boss. Preferably, the one or more retaining means may comprise at least a bent tab, preferably at least two bent tabs. The bent tabs may have the form of flaps or else similar projections.

According to an aspect, the boss is welded to the housing.

According to an alternative aspect, the boss is glued to the housing.

According to another alternative aspect, the boss is soldered to the housing.

According to yet another alternative aspect, the boss is threadedly fixed to the housing. According to yet another alternative aspect, the boss is press punched to the housing. The objects of the present invention are also achieved by a method of manufacturing a spring brake actuator, wherein the boss and the bracket are punched pressed together to the housing of the spring brake actuator during the same manufacturing step. According to an alternative manufacturing method, the bracket is mounted to the boss only at the end of the assembly or manufacturing line, for instance only after the step of mounting the boss to the housing of the spring brake actuator has been completed. The objects of the present invention are also achieved by a commercial vehicle comprising a spring brake actuator as described above.

For a more complete understanding of the invention, the invention will now be described in detail with reference to the accompanying drawings. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. Further, the features described in the description, the drawings and the claims disclosing the invention may be essential for the invention considered alone or in combination. In particular, any reference signs in the claims shall not be construed as limiting the scope of the invention. The wording "comprising" does not exclude other elements or steps. The word "a" or "an" does not exclude the plurality. The wording "a number of" items comprises also the number 1, i.e. a single item, and further numbers like 2, 3, 4 and so forth. In the accompanying drawings:

### List of figures

Figure 1 shows a cutout view of a portion of a prior art spring brake actuator;
Figure 2 shows a cutout detail view of a component of a spring brake actuator of the invention according to a first embodiment;
Figure 3 shows a perspective view of a portion of a spring brake actuator of the invention according to the first embodiment;
Figure 4 shows a perspective view of a portion of a spring brake actuator of the invention according to a second embodiment, in a first configuration;
Figure 5 shows a perspective view of a portion of a spring brake actuator of the invention according to the second embodiment, in a second configuration;
Figure 6 shows a perspective view of a portion of a spring brake actuator of the invention according to a third embodiment;
Figure 7 shows a perspective view of a portion of a spring brake actuator of the invention according to a fourth embodiment;
Figure 8 shows a perspective view of a portion of a spring brake actuator of the invention according to a fifth embodiment;
Figure 9 shows a perspective view of a portion of a spring brake actuator of the invention according to a sixth embodiment.

### Detailed description of the invention

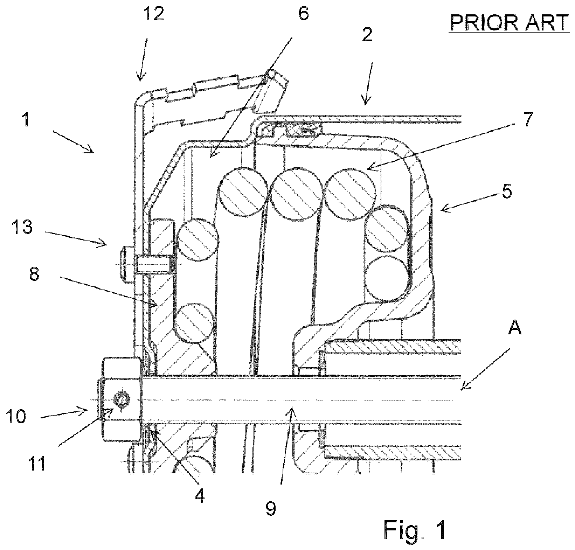

With reference to figure 1, a prior art spring brake actuator 1 is shown. The prior art spring brake actuator 1 comprises a housing 2 having a longitudinal axis A and a hole 4 located in correspondence with the longitudinal axis A.

The spring brake actuator 1 of the prior art comprises a release bolt 9 extending through the hole 4 of the housing 2 to the outside of the spring brake actuator. A support piston 5 defines, together with the housing 2, an interior space 6 for receiving the components of the spring brake actuator.

A compression spring 7 is located in the interior space 6 and rests upon the support piston and a spring seat 8 fitted to the housing. The release bolt 9 is threadedly connected with the spring seat 8 and is being held against the housing 2 by a release nut 10.

The spring seat 8 is fitted to the housing 2 through one or more screws (not shown) having a regular length.

The spring brake actuator of the prior art comprises a bracket 12 for supporting brake line cables, the bracket being mounted on the housing 2 of the spring brake actuator through one or more screws 13 having a length greater than the regular length of the screws only connecting the spring seat with the housing, so that those longer screws are able to firmly hold together the bracket 12, the housing 2 and the spring seat 8. According to the invention, the bracket is instead mounted on the housing of the spring brake actuator through fixedly connecting it to the boss. Such a solution, which is common to all embodiments, has several advantages, for instance it allows to avoid the use of screws in order to fix the bracket to the housing, therefore no piercing of the spring seat is necessary, which brings about an increase in its stiffness and safety. In addition, mounting the bracket on the boss allows an increase of the thickness of the bottom part of the housing, thus further increasing the strength, stiffness and therefore safety of the spring brake actuator. Furthermore, more design freedom is obtained since the bracket can be mounted in several different angular positions with respect to the longitudinal axis A of the spring brake actuator.

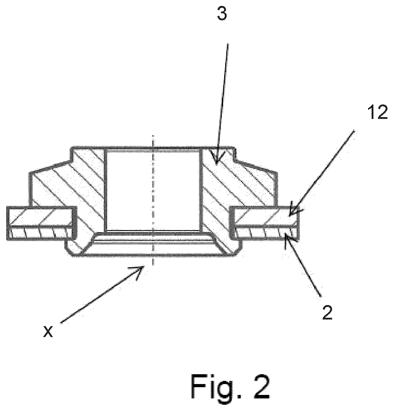

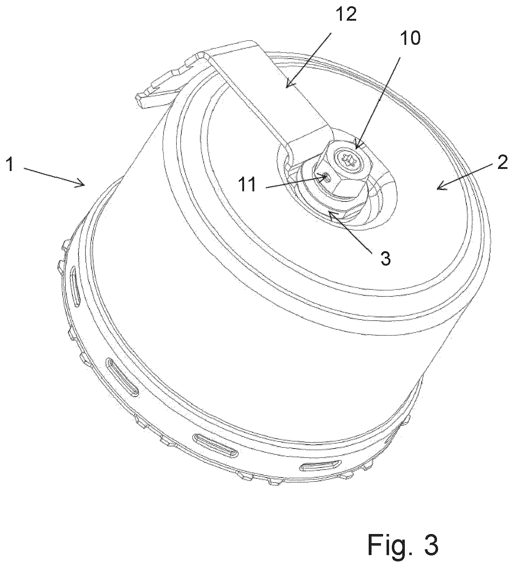

Figure 2 and figure 3 both refer to a first embodiment of the present invention. In figure 2, the longitudinal axis X of the boss coincides with the longitudinal axis A of the spring brake actuator.

According to the first embodiment, the bracket 12 is mounted on the housing 2 of the spring brake actuator 1 through a fixed connection to the boss 3. The bracket 12 is inserted between the housing 2 and the boss 3 and is held firmly in place by pressure forces e.g. by an interference fit.

According to the first embodiment, the boss 3 is punch pressed and joined to the housing 2 during the manufacturing of the spring brake actuator. Conveniently, the bracket is punch pressed and joined together with the boss and the housing during the same manufacturing step. The rotational angle at which the bracket is placed, around the longitudinal axis A of the spring brake actuator, is chosen during the assembly or manufacturing of the spring brake actuator before the press punching step. After press punching the bracket, boss and housing together, the rotational angle of the bracket becomes fixed since the contact forces exerted by the boss and, partly, by the housing, on the bracket, prevent the bracket from rotating and keep it firmly in place.

Conveniently, during the press punching step the boss, and/or the housing and/or the bracket may undergo some degree of physical deformation, to increase the strength of their fastening together.

Tightness of their fastening is excellent and, if needed, can in principle be further increased through e.g. the use of a liquid gasket.

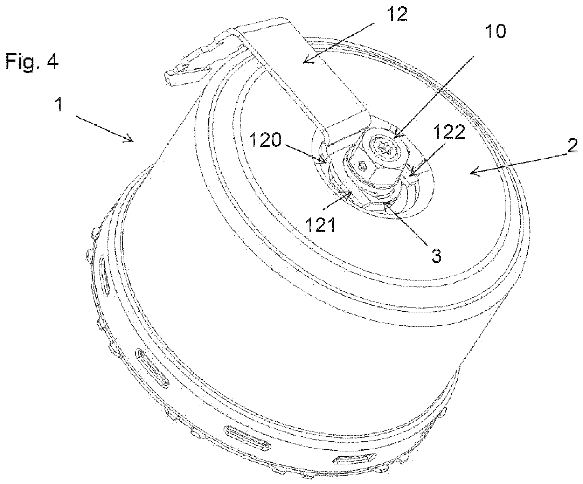

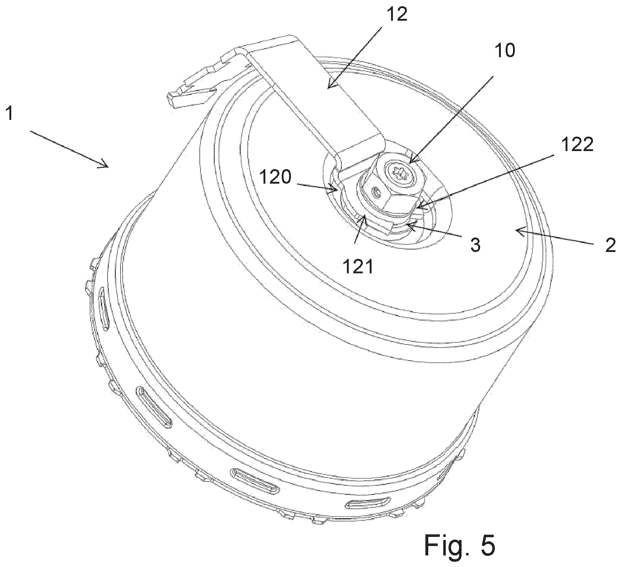

Figure 4 and figure 5 relate to a second embodiment of the invention.

According to the second embodiment, the bracket 12 comprises a fork-like end portion 120 having two elongated, bendable ends 121, 122.

During the manufacturing process, the bendable ends 121, 122 are kept open and the fork-like end portion 120 of the bracket is inserted into and around the boss 3, which is conveniently provided with one or more undercuts (not shown). In this embodiment, the rotational angle at which the bracket is placed, around the longitudinal axis A of the spring brake actuator, may depend upon the shape and position of the undercuts of the boss 3. Such an "open fork" configuration is shown in figure 4.

After the fork-like end portion 120 of the bracket is inserted into and around the boss 3, pressure is applied to the elongated, bendable ends 121, 122 which are therefore bent around the undercuts and fixedly join the bracket to the boss through a form-fit connection. Such a "closed fork" configuration is shown in figure 5.

The second embodiment has the advantage that the step of applying the bracket to the spring brake actuator can take place at the end of the assembly of the spring brake actuator. In other words, the manufacturing process becomes more flexible since application of the bracket may take place on previously assembled spring brake actuators.

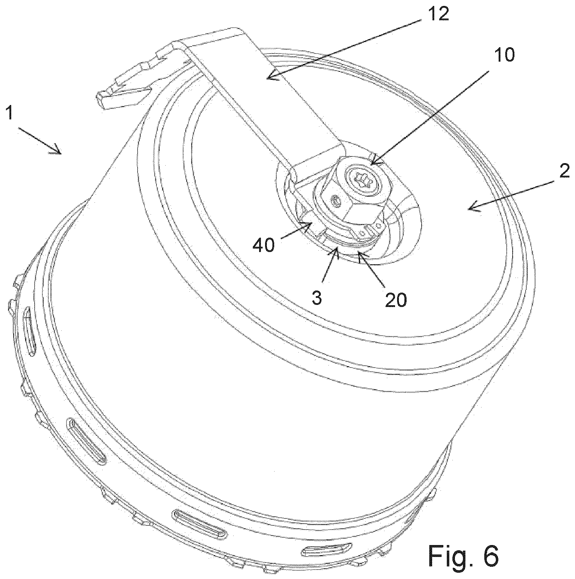

Figure 6 relates to a third embodiment of the invention.

According to the third embodiment, the bracket 12 is fixedly connected to the boss 3 through a circlip 20 or similar retaining rings. The circlip 20 can be installed or removed with the use of pliers, for instance needle-nose pliers. Since the circlips generally prevent axial movement but permit rotation, the bracket 12 is preferably provided with lateral bent tabs 40 or flaps which forbid rotation of the bracket 12 around the longitudinal axis A of the release bolt. Preferably, the boss 3 may comprise undercuts designed to engage with such bent tabs or flaps.

Similarly to the case of the second embodiment, also in the case of the third embodiment the step of applying the bracket to the spring brake actuator can take place at the end of the assembly of the spring brake actuator, thus adding flexibility to the manufacturing process.

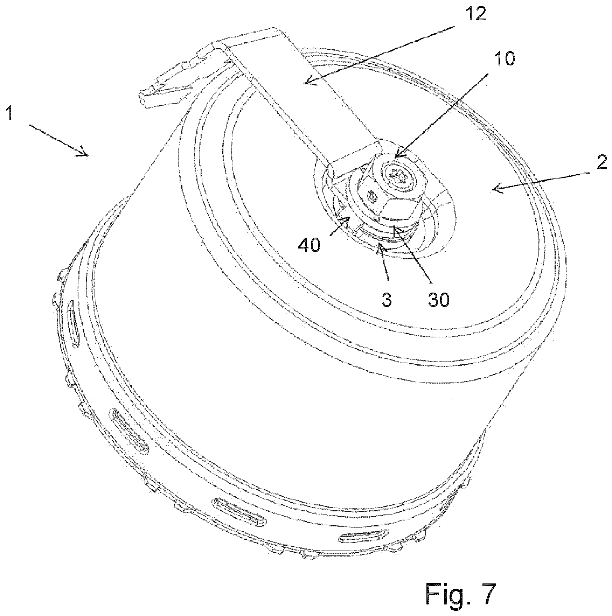

Figure 7 relates to a fourth embodiment of the invention.

According to the fourth embodiment, the bracket 12 is fixedly connected to the boss 3 through a nut 30 that may exhibit several different shapes, e.g. circular, hexagonal, etc. In any event, to forbid the rotational movement of the bracket 12 around the longitudinal axis A of the release bolt, and similarly to the case of the third embodiment, also in the case of the fourth embodiment, the bracket 12 preferably comprises lateral bent tabs 40 or flaps which may engage with undercuts provided on the boss 3.

From a manufacturing standpoint, also in the case of the fourth embodiment, the step of applying the bracket 12 to the housing 2 can take place at the end of the assembly of the spring brake actuator.

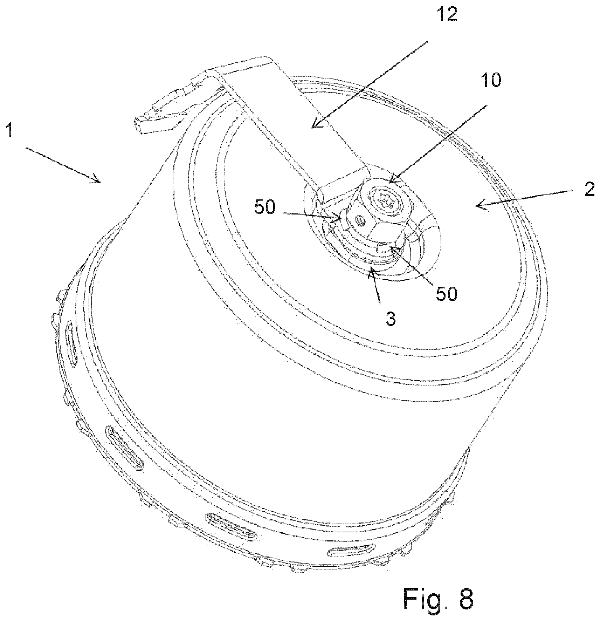

Figure 8 relates to a fifth embodiment of the invention.

According to the fifth embodiment, the bracket 12 is fixedly connected to the boss 3 through welding, e.g. through one or more welding spots 50 or else through a continuous or partially continuous circular welding around the interference line between the bracket 12 and the boss 3. Welding can take place using several different techniques, i.e. spot welding, laser welding, resistance welding, etc.

Welding the bracket 12 to the boss 3 inherently inhibits any rotational movement of the bracket 12 around the longitudinal axis A of the release bolt, hence it is not necessary to add any bent tabs or flaps to the bracket nor to provide undercuts to the boss.

Also in this case, the step of applying the bracket 12 to the housing 2 can take place at the end of the assembly of the spring brake actuator.

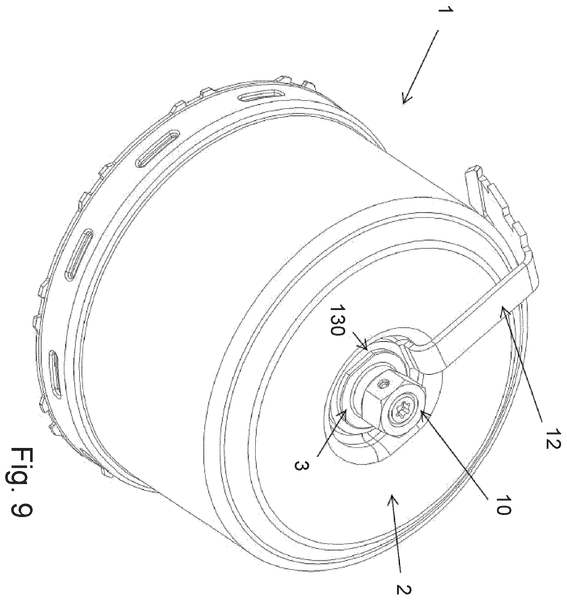

Figure 9 relates to a sixth embodiment of the invention.

According to the sixth embodiment, the bracket 12 comprises a ring-like end portion 130 that is pressed around the boss and firmly held in place through a form-fit connection. To enhance the stability of the form-fit connection, the boss 3 may be provided with undercuts or else with a profile that is not completely circular but that includes linear portions so that to present angles and the like; such an irregular profile should of course be matched by a respective mating profile on the ring-like portion 130 of the bracket 12, as shown in figure 9, where the irregular circular profile is designed to prevent any rotational movement of the bracket 12 around the longitudinal axis A of the release bolt. Also in this embodiment, the step of applying the bracket 12 to the housing 2 can conveniently take place at the end of the assembly of the spring brake actuator.

### List of reference signs (part of the description)

- 1: spring brake actuator
- 2: housing
- A: longitudinal axis
- 3: boss
- 4: hole
- 5: support piston
- 6: interior space
- 7: compression spring
- 8: spring seat
- 9: release bolt
- 10: release nut
- 11: pin
- 12: bracket for supporting brake line cables
- 13: prior art screw
- X: longitudinal axis of the boss
- 20: circlip
- 30: nut
- 40: bent tab
- 50: welded spot
- 120: fork-like end portion of bracket
- 121: first bendable end portion of bracket
- 122: second bendable end portion of bracket
- 130: ring-like end portion of bracket

## Claims

1. A spring brake actuator (1) comprising
a housing (2) having a longitudinal axis (A) and a hole (4) located in correspondence with the longitudinal axis (A);
a boss (3) fitted to the housing (2) in correspondence with the hole (4);
a support piston (5) defining, together with the housing (2), an interior space (6) for receiving components of the spring brake actuator;
a compression spring (7) located in the interior space (6) and resting upon the support piston (5) and a spring seat (8) fitted to the housing (2);
a release bolt (9) having a longitudinal axis which coincides with or is parallel to the longitudinal axis (A) of the housing (2), the release bolt (9) extending from outside of the spring brake actuator through the hole of the housing (2) and being held against the boss (3) of the housing by a release nut (10);
a bracket (12) for supporting brake line cables, the bracket (12) being mounted on the housing (2) of the spring brake actuator,
**characterized in that**
the bracket (12) is mounted on the housing (2) of the spring brake actuator (1) through fixedly connecting it to the boss (3).

2. The spring brake actuator (1) of claim 1, wherein the bracket (12) is fixedly connected to the boss (3) through pressing it between the housing (2) and the boss (3).

3. The spring brake actuator (1) of claim 1, wherein the bracket (12) is fixedly connected to the boss (3) through form-fit connecting it to the boss.

4. The spring brake actuator (1) of claim 3, wherein the boss (3) comprises a plurality of undercuts and the bracket (12) comprises a fork-like end portion (120) that is bent around the undercuts of the boss.

5. The spring brake actuator (1) of claim 3, wherein the bracket (12) comprises a ring-like end portion (130) that is pressed around the boss.

6. The spring brake actuator (1) of claim 1, wherein the bracket (12) is fixedly connected to the boss (3) through a circlip (20).

7. The spring brake actuator (1) of claim 1, wherein the bracket (12) is fixedly connected to the boss (3) through a nut (30).

8. The spring brake actuator (1) according to any of claims 6 or 7, wherein the bracket (12) comprises an end portion having one or more retaining means adapted to prevent a rotation of the bracket (12) with respect to the boss (3).

9. The spring brake actuator (1) of claim 8, wherein the one or more retaining means comprises at least a bent tab (40).

10. The spring brake actuator (1) according to any of claims 1 to 9, wherein the boss (3) is punched pressed to the housing (2).

11. Method of manufacturing a spring brake actuator (1) according to any of claims 1, 2 or 10, wherein the boss (3) and the bracket (12) are punched pressed together to the housing (2) of the spring brake actuator (1) in a same step.

12. Method of manufacturing a spring brake actuator (1) according to any of claims 1 and 3 to 10, wherein the bracket (12) is mounted on the boss (3) after a step of mounting the boss (3) to the housing (2) of the spring brake actuator (1).

13. Commercial vehicle comprising a spring brake actuator (1) according to any one of the preceding claims.

## Patentansprüche

1. Federspeicherbremszylinder (1), umfassend
ein Gehäuse (2), das eine Längsachse (A) und eine Bohrung (4) aufweist, die in Übereinstimmung mit der Längsachse (A) angeordnet ist;
einen Ansatz (3), der an dem Gehäuse (2) in Übereinstimmung mit der Bohrung (4) angebracht ist;
einen Stützkolben (5), der zusammen mit dem Gehäuse (2) einen Innenraum (6) zum Aufnehmen von Bauteilen des Federspeicherbremszylinders definiert;
eine Druckfeder (7), die in dem Innenraum (6) angeordnet ist und auf dem Stützkolben (5) und einem an dem Gehäuse (2) angebrachten Federsitz (8) aufliegt;
einen Lösebolzen (9), der eine Längsachse aufweist, die mit der Längsachse (A) des Gehäuses (2) zusammenfällt oder parallel zu dieser verläuft, wobei sich der Lösebolzen (9) von außerhalb des Federspeicherbremszylinders durch die Bohrung des Gehäuses (2) erstreckt und durch eine Lösemutter (10) gegen den Ansatz (3) des Gehäuses gehalten wird;
eine Halterung (12) zum Stützen von Bremsleitungskabeln, wobei die Halterung (12) an dem Gehäuse (2) des Federspeicherbremszylinders montiert ist,
**dadurch gekennzeichnet, dass**
die Halterung (12) an dem Gehäuse (2) des Federspeicherbremszylinders (1) durch festes Verbinden mit dem Ansatz (3) montiert ist.

2. Federspeicherbremszylinder (1) nach Anspruch 1, wobei die Halterung (12) durch Einpressen zwischen dem Gehäuse (2) und dem Ansatz (3) fest mit dem Ansatz (3) verbunden ist.

3. Federspeicherbremszylinder (1) nach Anspruch 1, wobei die Halterung (12) durch formschlüssiges Verbinden mit dem Ansatz fest mit dem Ansatz (3) verbunden ist.

4. Federspeicherbremszylinder (1) nach Anspruch 3, wobei der Ansatz (3) eine Vielzahl von Hinterschneidungen umfasst und die Halterung (12) einen gabelähnlichen Endabschnitt (120) umfasst, der um die Hinterschneidungen des Ansatzes gebogen ist.

5. Federspeicherbremszylinder (1) nach Anspruch 3, wobei die Halterung (12) einen ringartigen Endabschnitt (130) umfasst, der um den Ansatz gepresst ist.

6. Federspeicherbremszylinder (1) nach Anspruch 1, wobei die Halterung (12) durch einen Sicherungsring (20) fest mit dem Ansatz (3) verbunden ist.

7. Federspeicherbremszylinder (1) nach Anspruch 1, wobei die Halterung (12) durch eine Mutter (30) fest mit dem Ansatz (3) verbunden ist.

8. Federspeicherbremszylinder (1) nach einem der Ansprüche 6 oder 7, wobei die Halterung (12) einen Endabschnitt aufweist, der ein oder mehrere Haltemittel umfasst, die so angepasst sind, dass sie eine Drehung der Halterung (12) relativ zu dem Ansatz (3) verhindern.

9. Federspeicherbremszylinder (1) nach Anspruch 8, wobei das eine oder die mehreren Haltemittel mindestens eine gebogene Lasche (40) umfassen.

10. Federspeicherbremszylinder (1) nach einem der Ansprüche 1 bis 9, wobei der Ansatz (3) auf das Gehäuse (2) stanzgepresst ist.

11. Verfahren zum Herstellen eines Federspeicherbremszylinders (1) nach einem der Ansprüche 1, 2 oder 10, wobei der Ansatz (3) und die Halterung (12) in einem gleichen Schritt zusammen auf das Gehäuse (2) des Federspeicherbremszylinders (1) stanzgepresst werden.

12. Verfahren zum Herstellen eines Federspeicherbremszylinders (1) nach einem der Ansprüche 1 und 3 bis 10, wobei die Halterung (12) nach einem Schritt des Montierens des Ansatzes (3) an dem Gehäuse (2) des Federspeicherbremszylinders (1) an dem Ansatz (3) montiert wird.

13. Nutzfahrzeug, umfassend einen Federspeicherbremszylinder (1) nach einem der vorstehenden Ansprüche.

## Revendications

1. Actionneur de frein à ressort (1) comprenant
un logement (2) ayant un axe longitudinal (A) et un trou (4) localisé en correspondance avec l'axe longitudinal (A) ;
un bossage (3) monté sur le logement (2) en correspondance avec le trou (4) ;
un piston de support (5) définissant, conjointement avec le logement (2), un espace intérieur (6) permettant de recevoir des composants de l'actionneur de frein à ressort ;
un ressort de compression (7) localisé dans l'espace intérieur (6) et reposant sur le piston de support (5), et un siège de ressort (8) monté sur le logement (2) ;
un boulon de libération (9) ayant un axe longitudinal qui coïncide avec, ou est parallèle à, l'axe longitudinal (A) du logement (2), le boulon de libération (9) s'étendant de l'extérieur de l'actionneur de frein à ressort à travers le trou du logement (2) et étant maintenu contre le bossage (3) du logement par un écrou de libération (10) ;
une console (12) permettant de supporter des câbles de ligne de frein, la console (12) étant montée sur le logement (2) de l'actionneur de frein à ressort,
**caractérisé en ce que**
la console (12) est montée sur le logement (2) de l'actionneur de frein à ressort (1) en la reliant fixement au bossage (3).

2. Actionneur de frein à ressort (1) selon la revendication 1, dans lequel la console (12) est reliée fixement au bossage (3) en la pressant entre le logement (2) et le bossage (3).

3. Actionneur de frein à ressort (1) selon la revendication 1, dans lequel la console (12) est reliée fixement au bossage (3) en la reliant par complémentarité de forme au bossage.

4. Actionneur de frein à ressort (1) selon la revendication 3, dans lequel le bossage (3) comprend une pluralité de contre-dépouilles et la console (12) comprend une partie d'extrémité de type fourche (120) qui est pliée autour des contre-dépouilles du bossage.

5. Actionneur de frein à ressort (1) selon la revendication 3, dans lequel la console (12) comprend une partie d'extrémité de type anneau (130) qui est pressée autour du bossage.

6. Actionneur de frein à ressort (1) selon la revendication 1, dans lequel la console (12) est reliée fixement au bossage (3) par le biais d'un circlip (20).

7. Actionneur de frein à ressort (1) selon la revendication 1, dans lequel la console (12) est reliée fixement au bossage (3) par le biais d'un écrou (30).

8. Actionneur de frein à ressort (1) selon l'une quelconque des revendications 6 ou 7, dans lequel la console (12) comprend une partie d'extrémité ayant un ou plusieurs moyens de retenue conçus pour empêcher une rotation de la console (12) par rapport au bossage (3).

9. Actionneur de frein à ressort (1) selon la revendication 8, dans lequel le ou les moyens de retenue comprennent au moins une languette pliée (40).

10. Actionneur de frein à ressort (1) selon l'une quelconque des revendications 1 à 9, dans lequel le bossage (3) est embouti sur le logement (2).

11. Procédé de fabrication d'un actionneur de frein à ressort (1) selon l'une quelconque des revendications 1, 2 ou 10, dans lequel le bossage (3) et la console (12) sont emboutis conjointement sur le logement (2) de l'actionneur de frein à ressort (1) dans une même étape.

12. Procédé de fabrication d'un actionneur de frein à ressort (1) selon l'une quelconque des revendications 1 et 3 à 10, dans lequel la console (12) est montée sur le bossage (3) après une étape de montage du bossage (3) sur le logement (2) de l'actionneur de frein à ressort (1).

13. Véhicule utilitaire comprenant un actionneur de frein à ressort (1) selon l'une quelconque des revendications précédentes.
